# EUROPEAN PATENT APPLICATION

(11) **EP 4 277 144 A1**
(43) Date of publication of application: **15.11.2023**
(21) Application number: 21918289.6
(22) Date of filing: 13.01.2021
(51) Int. Cl.: H04B 7/04, H04L 1/00

(54) **FEEDBACK MODE DETERMINATION METHOD AND APPARATUS, AND DEVICES AND STORAGE MEDIUM**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Ipside
(86) International application number: PCT/CN2021/071555
(87) International publication number: WO 2022/151074

(57) **Abstract**

A method and an apparatus for feedback mode determination, a device, and a storage medium are provided in implementations of the present disclosure. The method includes the following. A feedback mode for channel-state information (CSI) of a wireless channel is determined based on first information, the first information being used for indicating channel characteristics of the wireless channel. In implementations of the present disclosure, a terminal device can send the CSI to a network device in different feedback modes, and accordingly, the network device can receive the CSI differentially based on different feedback modes. In this way, it is possible to avoid using a fixed feedback mode for CSI in different channel environments of the wireless channel, and ensure that a feedback mode for the CSI matches a channel environment of the wireless channel, so that CSI feedback adapts to a complex channel environment of the wireless channel, which is conductive to obtaining an optimal performance of CSI feedback and obtaining a better performance gain of a communication system.

## Description

### TECHNICAL FIELD

This disclosure relates to the field of communication processing technology, and in particular, to a method and an apparatus for feedback mode determination, a device, and a storage medium.

### BACKGROUND

Multiple-input multiple-output (MIMO) technology is a key technology for communication systems such as a long term evolution (LTE) system and a new radio (NR) system. Channel-state information (CSI) indication determines the performance of MIMO transmission.

Generally, the CSI indication may indicate information such a channel quality indicator (CQI), a precoding matrix indicator (PMI), a rank indicator (RI), etc. In view of procedures, a network device may first configure, for a terminal device, indication parameter information for the CSI indication. For example, the network device configures which information in the CQI, the PMI, the RI, and other information needs to be indicated by the terminal device. Meanwhile, the network device may configure, for the terminal device, some reference signals for CSI measurement, such as a synchronization signal block (SSB)/a physical broadcast channel (PBCH) block, and/or a CSI reference signal (CSI-RS). The terminal device determines current CSI of a wireless channel by measuring the described reference signals, and sends the current CSI to the network device by using the indication parameter information configured by the network device for the CSI indication. As such, the network device can configure a reasonable and efficient data transmission mode based on a current channel condition of the wireless channel.

However, since a channel environment of the wireless channel is complex and always changes, how to determine an optimal feedback mode for CSI feedback in a complex channel environment so as to obtain an optimal performance of CSI feedback also needs to be further discussed and studied.

### SUMMARY

A method and an apparatus for feedback mode determination, a device, and a storage medium are provided in implementations of the present disclosure. Technical solutions are as follows.

In a first aspect, a method for feedback mode determination is provided in implementations of the present disclosure. The method is applied to a first device and includes the following. A feedback mode for channel-state information (CSI) of a wireless channel is determined based on first information, where the first information is used for indicating channel characteristics of the wireless channel.

In another aspect, a method for feedback mode determination is provided in implementations of the present disclosure. The method is applied to a second device and includes the following. A feedback mode for CSI of a wireless channel is determined based on first information, where the first information is used for indicating channel characteristics of the wireless channel.

In another aspect, an apparatus for feedback mode determination is provided in implementations of the present disclosure. The apparatus for feedback mode determination is deployed in a first device and includes a feedback mode determining module. The feedback mode determining module is configured to determine a feedback mode for CSI of a wireless channel based on first information, where the first information is used for indicating channel characteristics of the wireless channel.

In another aspect, an apparatus for feedback mode determination is provided in implementations of the present disclosure. The apparatus for feedback mode determination is deployed in a second device and includes a feedback mode determining module. The feedback mode determining module is configured to determine a feedback mode for CSI of a wireless channel based on first information, where the first information is used for indicating channel characteristics of the wireless channel.

In another aspect, a first device is provided in implementations of the present disclosure. The first device includes a processor and a transceiver connected with the processor. The processor is configured to determine a feedback mode for CSI of a wireless channel based on first information, where the first information is used for indicating channel characteristics of the wireless channel.

In another aspect, a second device is provided in implementations of the present disclosure. The second device includes a processor and a transceiver connected with the processor. The processor is configured to determine a feedback mode for CSI of a wireless channel based on first information, where the first information is used for indicating channel characteristics of the wireless channel.

In another aspect, a computer-readable storage medium is provided in implementations of the present disclosure, the storage medium stores a computer program, and the computer program is configured to be executed by a processor of a first device to implement the method for feedback mode determination at a first device side.

In another aspect, a computer-readable storage medium is provided in implementations of the present disclosure, the storage medium stores a computer program, and the computer program is configured to be executed by a processor of a second device to implement the method for feedback mode determination at a second device side.

In another aspect, a chip is provided in implementations of the present disclosure, the chip includes a programmable logic circuit and/or program instructions, and when the chip runs on a first device, the chip is configured to implement the method for feedback mode determination at the first device side.

In another aspect, a chip is provided in implementations of the present disclosure, the chip includes a programmable logic circuit and/or program instructions, and when the chip runs on a second device, the chip is configured to implement the method for feedback mode determination at the second device side.

In another aspect, a computer program product is provided in implementations of the present disclosure, and the computer program product, when running on the first device, is configured to implement the method for feedback mode determination at the first device side.

In another aspect, a computer program product is provided in implementations of the present disclosure, and the computer program product, when running on the second device, is configured to implement the method for feedback mode determination at the second device side.

Technical solutions provided in implementations of the present disclosure may have the following beneficial effects.

The terminal device and the network device respectively determine a feedback mode for CSI of the wireless channel based on channel characteristics of the wireless channel, so that the terminal device can send the CSI to the network device in different feedback modes, and accordingly, the network device can also receive the CSI differentially based on different feedback modes. In this way, it is possible to avoid using a fixed feedback mode for CSI in different channel environments of the wireless channel, and ensure that a feedback mode for CSI matches a channel environment of the wireless channel, so that CSI feedback adapts to a complex channel environment of the wireless channel, which is conductive to obtaining an optimal performance of CSI feedback and obtaining a better performance gain of a communication system.

### BRIEF DESCRIPTION OF THE DRAWINGS

In order to describe technical solutions of implementations of the present disclosure more clearly, the following will give a brief introduction to the accompanying drawings used for describing the implementations. Apparently, the accompanying drawings hereinafter described are merely some implementations of the present disclosure. Based on these drawings, those of ordinary skill in the art can also obtain other drawings without creative effort.
FIG. 1 is a schematic diagram of a system architecture provided in an implementation of the present disclosure.
FIG. 2 is a schematic flowchart of channel-state information (CSI) feedback provided in an implementation of the present disclosure.
FIG. 3 is a schematic structural diagram of a neural network (NN) provided in an implementation of the present disclosure.
FIG. 4 is a schematic structural diagram of a convolutional neural network (CNN) provided in an implementation of the present disclosure.
FIG. 5 is a schematic diagram of a network architecture for CSI indication by using a neural network model provided in an implementation of the present disclosure.
FIG. 6 is a schematic flowchart of a method for feedback mode determination provided in an implementation of the present disclosure.
FIG. 7 is a schematic diagram of a process of feedback mode determination provided in an implementation of the present disclosure.
FIG. 8 is a schematic diagram of a process of feedback mode determination provided in another implementation of the present disclosure.
FIG. 9 is a schematic diagram of a process of feedback mode determination provided in yet another implementation of the present disclosure.
FIG. 10 is a schematic diagram of a process of feedback mode determination provided in another implementation of the present disclosure.
FIG. 11 is a block diagram of an apparatus for feedback mode determination provided in an implementation of the present disclosure.
FIG. 12 is a block diagram of an apparatus for feedback mode determination provided in another implementation of the present disclosure.
FIG. 13 is a block diagram of an apparatus for feedback mode determination provided in yet another implementation of the present disclosure.
FIG. 14 is a block diagram of an apparatus for feedback mode determination provided in still another implementation of the present disclosure.
FIG. 15 is a block diagram of a first device provided in an implementation of the present disclosure.
FIG. 16 is a block diagram of a second device provided in an implementation of the present disclosure.

### DETAILED DESCRIPTION

In order to make objectives, technical solutions, and advantages of the present disclosure clearer, implementations of the present disclosure are further described in detail below with reference to accompanying drawings.

A network architecture and a service scenario described in implementations of the present disclosure are intended to describe technical solutions of implementations of the present disclosure more clearly, and do not constitute a limitation to technical solutions provided in implementations of the present disclosure. A person of ordinary skill in the art should know that, with the evolution of the network architecture and the appearance of a new service scenario, technical solutions provided in implementations of the present disclosure are applicable to similar technical problems.

It should be understood that technical solutions of implementations of the present disclosure may be applied to various communication systems, for example, a long term evolution (LTE) system, an LTE frequency division duplex (FDD) system, an LTE time division duplex (TDD) system, an advanced LTE (LTE-A) system, a new radio (NR)system, an advanced NR system, an LTE-based access to unlicensed spectrum (LTE-U) system, and a NR-unlicensed (NR-U) system, a wireless local area network (WLAN), wireless fidelity (WiFi), a next generation communication system, or other communication systems, etc.

Generally, a conventional communication system supports a limited number of connections and is easy to be implemented. However, with the development of communication technologies, a mobile communication system not only supports conventional communication, but also supports other types of communication, for example, device to device (D2D) communication, machine to machine (M2M) communication, machine type communication (MTC), vehicle to vehicle (V2V) communication, and a vehicle to everything (V2X) system. Implementations of the present disclosure may also be applied to these communication systems.

In implementations of the present disclosure, for ease of description, technical solutions provided in implementations of the present disclosure are described with a "first device" being "terminal device" and a "second device" being a "network device" for example. It should be understood that this does not limit an application scenario of implementations of the present disclosure. For example, the "first device" and the "second device" may be each implemented as a "terminal device". That is, technical solutions provided in implementations of the present disclosure may also be applied to D2D communication systems, V2V communication systems, and V2X communication systems.

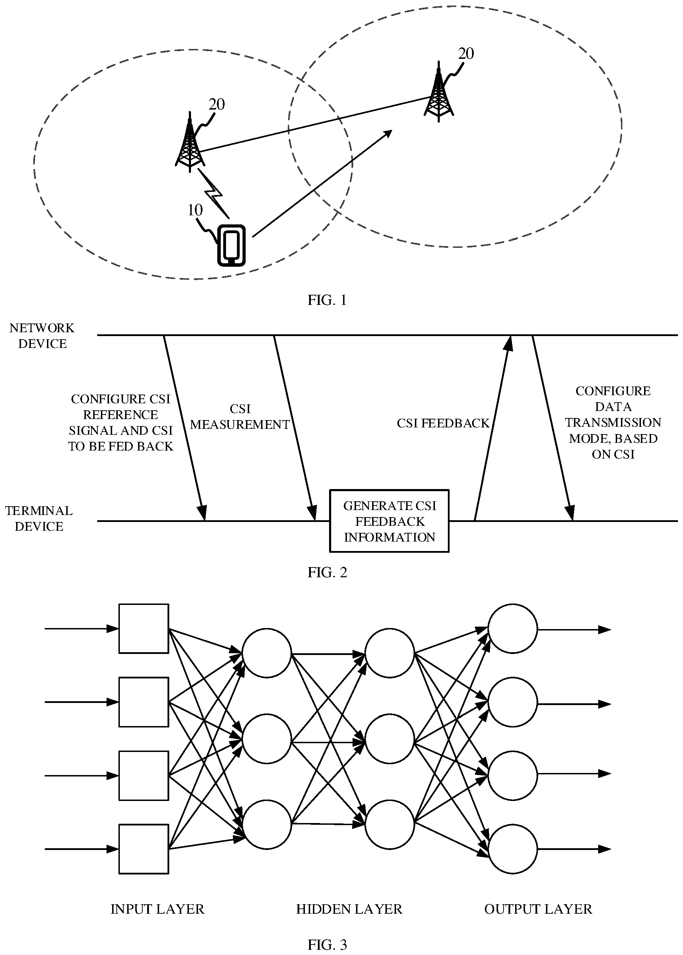

Reference is made to FIG. 1, which is a schematic diagram of a system architecture provided in an implementation of the present disclosure. The system architecture may include a terminal device 10 and a network device 20.

Generally, there are multiple terminal devices 10, and one or more terminal devices 10 may be distributed in a cell managed by each network device 20. The terminal device 10 may include various handheld devices, in-vehicle devices, wearable devices, computing devices with wireless communication functions, or other processing devices connected with a wireless modem, various forms of user equipment (UE), a mobile station (MS), etc. For ease of description, in implementations of the present disclosure, the foregoing devices are generally referred to as a terminal device.

The network device 20 is an apparatus deployed in an access network to provide the terminal device 10 with wireless communication functions. The network device 20 may include various forms of macro base stations, micro base stations, relay stations, access points, etc. In systems adopting different wireless access technologies, a device having a network-device function may be under different names, for example, in a 5th-generation mobile communication technology (5G) NR system, the device is referred to as a gNodeB or a gNB. As the communication technology evolves, the name "network device" may change. For ease of description, in implementations of the present disclosure, the foregoing apparatus for providing the terminal device 10 with wireless communication functions are generally referred to as a network device.

"5G NR system" in implementation of the present disclosure may also be referred to as a 5G system or an NR system, and a person of ordinary skill in the art should understand the meaning thereof.

Before describing technical solutions of implementations of the present disclosure, some terms and related technologies appeared in implementations of the present disclosure are described first.

### I. Channel-state information (CSI)

Multiple-input multiple-output (MIMO) technology is a key technology in communication systems such as an LTE system and an NR system, and CSI indication determines the performance of MIMO transmission.

Generally, the CSI indication may include an indication for information such as a channel quality indicator (CQI), a precoding matrix indicator (PMI), a rank indicator (RI), etc. Reference is made to FIG. 2, which is a schematic flowchart of CSI feedback provided in an implementation of the present disclosure. As can be seen from FIG. 2, a network device may first configure, for a terminal device, indication parameter information for the CSI indication. For example, the network device configures which information in the CQI, the PMI, the RI, and other information needs to be indicated by the terminal device. Meanwhile, the network device may configure for the terminal device some reference signals for CSI measurement, such as a synchronization signal block (SSB) and/or a CSI reference signal (CSI-RS). The terminal device determines current CSI of a wireless channel by measuring the reference signals, and sends the current CSI to the network device by using the indication parameter information configured by the network device for the CSI indication. As such, the network device can configure a reasonable and efficient data transmission mode based on a current channel condition of the wireless channel.

### II. Artificial intelligence (AI)

In recent years, researches on AI represented by neural networks have achieved great results in many fields, and will also have important effects on people's production and life for a long time in the future.

Reference is made to FIG. 3, which is a schematic structural diagram of a neural network provided in an implementation of the present disclosure. As illustrated in FIG. 3, a basic structure of a simple neural network includes an input layer, a hidden layer, and an output layer. The input layer is responsible for receiving data, the hidden layer is responsible for processing data, and a final result is generated at the output layer. As illustrated in FIG. 3, each node represents a processing unit, and may also be considered as simulating a neuron, multiple neurons form a layer of a neural network, and a whole neural network is constructed by multiple layers of information transmission and processing.

With the continuous development of neural network research, in recent years, a neural network deep learning algorithm has also been proposed. More hidden layers are introduced, and feature learning is performed through layer-by-layer training of a neural network with multiple hidden layers, so that the learning and processing capability of the neural network is greatly improved, and the neural network deep learning algorithm is widely used in aspects such as pattern recognition, signal processing, optimization and combination, and abnormality detection.

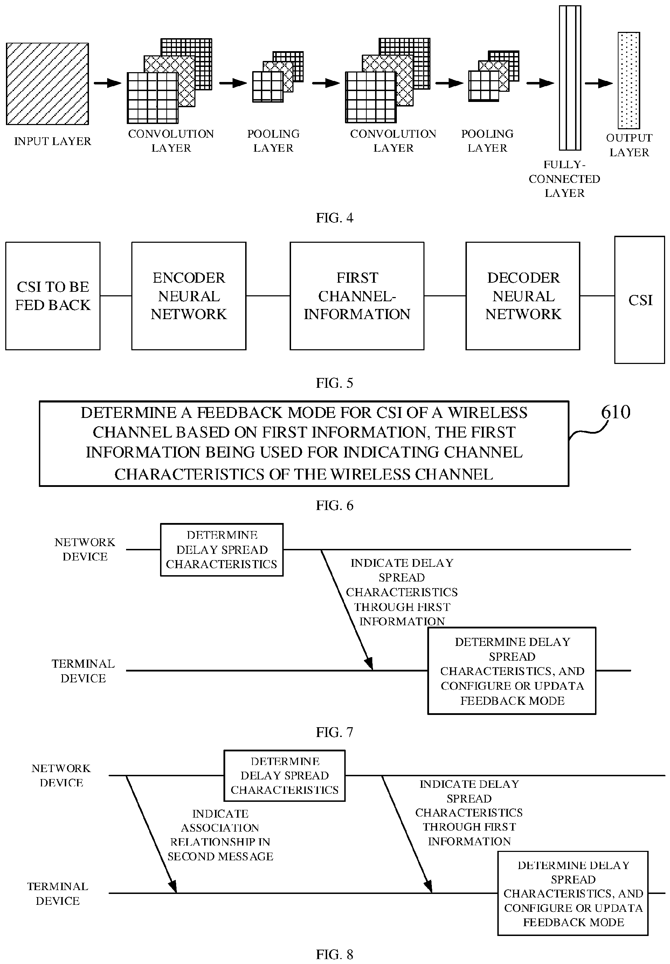

Meanwhile, with the development of deep learning, a convolutional neural network (CNN) is further studied. Reference is made to FIG. 4, which is a schematic structural diagram of a convolutional neural network provided in an implementation of the present disclosure. As illustrated in FIG. 4, a basic structure of the CNN includes an input layer, multiple convolution layers, multiple pooling layers, a fully-connected layer, and an output layer. The introduction of convolution layers and the pooling layer effectively controls the proliferation of network parameters, limits the number of parameters, mines characteristics of a local structure, and improves the robustness of an algorithm.

### III. Combination of CSI indication and AI

In the related art, basic principles of a wireless communication system are generally based on theoretical modeling and parameter selection of an actual communication environment. With further enhancement of requirements for flexibility, applicability, rate, and capacity of the wireless communication system, a gain brought by a conventional working manner of the wireless communication system based on classical model theory is gradually weakened. At present, some new studies have been carried out to solve the above problem, for example, obtaining and indicating the CSI with AI.

Reference is made to FIG. 5, which is a schematic diagram of a network architecture for CSI indication by using a neural network model provided in an implementation of the present disclosure. As illustrated in FIG. 5, an encoder neural network is used for CSI indication, and a decoder neural network is used for CSI recovery. At an encoding end (encoder), the encoder neural network is firstly invoked to encode CSI to be fed back to generate first channel-information. At a decoding end (decoder), after the first channel-information is received, the decoder neural network is invoked to decode the first channel-information to obtain the CSI.

In the related art, research on indication and CSI recovery based on a neural network is mainly aimed at indication and recovery of CSI under a specific channel condition. In practical application scenarios, channel environment of a wireless channel is extremely complex, and different scenarios may have different transceiving channel characteristics. A large amount of research and experiments show that an encoder neural network and a decoder neural network trained under a specific channel condition tend to have poor performance under a new channel condition. For example, a neural network trained in a channel environment with a relatively large delay spread is not suitable in a scenario with a relatively small delay spread, and is unable to achieve a good effect; and vice versa. Different wireless channel conditions may correspond to different channel delay spread due to various reasons, these reasons include at least one of the following: difference between scattering environments of a wireless channel, difference between indoor and outdoor environments, and difference between dense areas and open areas.

Due to the complexity of channel environments of a wireless channel, how to determine an optimal feedback mode for CSI feedback in a complex channel environment, such as determining an optimal neural network for CSI feedback to obtain an optimal performance of CSI feedback, still needs to be further discussed and studied.

Based on the above, a method for feedback mode determination is provided in implementations of the present disclosure, which can be used for solving the described technical problem. Technical solutions of the present disclosure will be described below with reference to implementations.

Reference is made to FIG. 6, which is a schematic flowchart of a method for feedback mode determination provided in an implementation of the present disclosure. The method may be applied to the system architecture illustrated in FIG. 1, and the method includes at least part of the following.

S610, a feedback mode for CSI of a wireless channel is determined based on first information, where the first information is used for indicating channel characteristics of the wireless channel.

After determining the CSI of the wireless channel, the terminal device needs to feed back the CSI to the network device. In implementations of the present disclosure, the terminal device may send the CSI to the network device in different feedback modes, and correspondingly, the network device may also receive the CSI differentially based on the different feedback modes, so as to obtain an optimal performance of CSI feedback, such that a communication system can obtain a better performance gain.

Based on such, during CSI feedback of the wireless channel, the terminal device and the network device each need to determine a feedback mode for the CSI, and configure or adjust the feedback mode for the CSI in time. In implementations of the present disclosure, the terminal device and the network device may each determine the feedback mode for the CSI based on the first information, where the first information is used for indicating channel characteristics of the wireless channel. That is, the terminal device and the network device adaptively determine the feedback mode for the CSI according to the change of channel characteristics of the wireless channel. A specific mode for the terminal device or the network device to determine the feedback mode based on the first information is not limited in implementations of the present disclosure, and examples of feedback mode determination are given below.

In an example, the first information and feedback modes are in an association relationship, so that once the first information is determined, a feedback mode associated with the first information can be used as the feedback mode for the CSI of the wireless channel. For example, the first information includes information A and information B, and the feedback mode includes mode A and mode B, information A and mode A are in an association relationship, and information B and mode B are in an association relationship. Therefore, when the first information is information A, the feedback mode is mode A; and when the first information is information B, the feedback mode is mode B.

In another example, an association relationship exists between channel characteristics of the wireless channel and feedback modes, so that when the first information is determined, a channel characteristic of the wireless channel is determined based on the first information first, and then the feedback mode associated with the channel characteristic is determined as a feedback mode for the CSI of the wireless channel. For example, when the channel characteristics of the wireless channel include delay spread characteristics, the delay spread characteristics include characteristic A and characteristic B, and the feedback modes include mode A and mode B. An association relationship exists between characteristic A and mode A, and an association relationship exists between characteristic B and mode B. When the first information indicates that the delay spread characteristic is characteristic A, the feedback mode is mode A; and when the first information indicates that the delay spread characteristic is characteristic B, the feedback mode is mode B.

In another example, the first information is processed by invoking a mode determination model, such that the feedback mode for the CSI of the wireless channel can be obtained. The mode determination model includes a pre-trained neural network model for feedback mode determination. In implementations of the present disclosure, multiple groups of channel characteristics and an optimal feedback mode corresponding to each group of channel characteristics may be obtained in advance. Then training samples are constructed, and each training sample includes a group of channel characteristics and an optimal feedback mode corresponding to said group of channel characteristics. Then, the mode determination model is trained with the constructed training samples, and parameters of the mode determination model are continuously adjusted, so that a loss function of the mode determination model converges, thereby completing training of the mode determination model. In subsequent using, the first information can be processed by the trained mode determination model, such that an optimal feedback mode can be automatically matched.

It should be understood that determination of a feedback mode for the CSI described in implementations of the present disclosure may refer to a first determination process, that is, operations at S610 include configuring a feedback mode based on the first information. The determination of the feedback mode for the CSI may also refer to a determination process after the first time, that is, a process of adjusting the feedback mode after the feedback mode is determined the first time, and the operations at S610 include updating the feedback mode based on the first information.

In an example, the channel characteristics of the wireless channel described in implementations of the present disclosure refer to channel characteristics of the wireless channel at a current moment (or referred to as current channel characteristics of the wireless channel), which is not limited herein. For example, due to existence of a processing delay, the channel characteristics of the wireless channel may also refer to channel characteristics of the wireless channel at a first moment, the first moment being a moment prior to the current moment".

Specific contents of the channel characteristics of the wireless channel are not limited in implementations of the present disclosure. In an example, the channel characteristics of the wireless channel includes at least one of delay spread characteristics, azimuth angle of departure (AOD) spread characteristics, azimuth angle-of-arrival (AOA) spread characteristics, zenith AOD spread characteristics, zenith AOA spread characteristics, shadow fading characteristics, multipath-cluster number characteristics, sub-path number characteristics in a multipath cluster, intra-cluster delay spread characteristics, intra-cluster azimuthal AOD spread characteristics, intra-cluster azimuthal AOA spread characteristics, intra-cluster zenith AOD spread characteristics, intra-cluster zenith AOA spread characteristics, or intra-cluster shadow fading characteristics.

For ease of description, in the following implementations, technical solutions provided in implementations of the present disclosure are described by taking the channel characteristics of the wireless channel including delay spread characteristics as an example. It should be understood that this does not constitute a limitation to the present disclosure. In the following implementations, the channel characteristics of the wireless channel may also include other contents, for example, including azimuth AOD spread characteristics, or including delay spread characteristics and azimuth AOD spread characteristics, or including azimuth AOD spread characteristics and zenith AOD spread characteristics.

For example, the channel characteristics of the wireless channel includes delay spread characteristics, optionally, the first information includes delay spread information and/or category indication information. The category indication information is used for indicating a category to which the delay spread information corresponds in a first association relationship. For example, the delay spread information includes N (N is a positive number) nanoseconds (or microseconds, milliseconds), such as 10 microseconds, 30 microseconds, and 300 microseconds; and the category indication information is used for indicating the Y-th (Y is a positive integer less than or equal to X) category in X categories (X is a positive integer), for example, the eighth category of in ten categories.

The first association relationship includes an association relationship between the delay spread information and the category indication information. Optionally, the first association relationship is pre-defined in a communication protocol. Alternatively, the first association relationship is carried in a second message from the network device. When the first association relationship is carried in the second message from the network device, the method further includes that the network device sends the second message to the terminal device. Optionally, the second message includes at least one of: a broadcast message, a system information block (SIB), a radio resource control (RRC) message, RRC reconfiguration signaling, downlink control information (DCI), a media access control (MAC) control element (CE), a physical downlink control channel (PDCCH) order, or data information.

A mode for determining and obtaining the first information is not limited in implementations of the present disclosure. In an example, the first information is determined by the terminal device and sent to the network device. In another example, the first information is determined by the network device and sent to the terminal device. In yet another example, the first information is determined by the terminal device and the network device separately. It should be understood that, when the first information is determined by the terminal device and the network device separately, the terminal device may also send the first information determined by the terminal device to the network device, so that the network device compares the first information determined by the network device and the first information determined by the terminal device; and the network device may also send the first information determined by the network device to the terminal device, so that the terminal device compares the first information determined by the terminal device and the first information determined by the network device. Therefore, the accuracy of the first information can be ensured, and the feedback mode for the CSI can be determined more accurately. For other illustrations about the mode for determining and obtaining the first information, reference may be made to the following implementations, which will not be repeatedly described in detail herein.

In an implementation, the feedback mode includes feeding back CSI through a feedback model, where the feedback model includes a neural network model used for feeding back the CSI.

In implementations of the present disclosure, the feedback mode for the CSI includes feeding back the CSI through the feedback model, where the feedback model includes the neural network model configured for CSI feedback, and the neural network model can encode or decode the CSI, so that CSI feedback satisfies requirements of flexibility, adaptability, rate, capacity, etc. of a communication system. Optionally, the CSI is fed back by the terminal device to the network device. For the terminal device, the feedback model includes an encoding model, and for the network device, the feedback model includes a decoding model. Optionally, in order to achieve an optimal performance of CSI feedback, the encoding model at a terminal device side and the decoding model at a network device side are obtained through joint training, that is, there is an association relationship between the encoding model on the terminal device side and the decoding model at the network device side.

For example, the feedback model includes the encoding model at the terminal device side and the decoding model at the network device side. In an implementation, after operations at S610, the method further includes the following. The terminal device invokes the encoding model to encode the CSI to obtain first channel-information. The terminal device sends the first channel-information to the network device. The network device invokes the decoding model to decode the first channel-information to obtain the CSI. That is, the encoding model is used for CSI indication at the terminal device side, and the decoding model is used for CSI recovery at the network device side.

In conclusion, according to technical solutions provided in implementations of the present disclosure, based on the channel characteristics of the wireless channel, the terminal device and the network device each determine a feedback mode for the CSI of the wireless channel, so that the terminal device can send the CSI to the network device in different feedback modes, and accordingly, the network device can receive the CSI differentially based on different feedback modes. In this way, it is possible to avoid using a fixed feedback mode for CSI in different channel environments of the wireless channel and ensure that a feedback mode for the CSI matches a channel environment of the wireless channel, so that the CSI feedback adapts to a complex channel environment of the wireless channel, which is conductive to obtaining optimal performance of CSI feedback and obtaining a better performance gain of a communication system.

In implementations of the present disclosure, the first information may be determined by the network device and sent to the terminal device, or the first information may be determined by the terminal device and sent to the network device. That is, determination of the feedback mode may be triggered by the network device (the first information is determined by the network device), and may also be triggered by the terminal device (the first information is determined by the terminal device). These two cases will be described below.

First, a case where the determination of the feedback mode is triggered by the network device will be described.

In an implementation, the above method further includes the following operations.

### (1) the network device determines the first information.

When configuration or update of feedback information is triggered by the network device, the network device determines the first information, that is, the network device determines the channel characteristics of the wireless channel, such as the delay spread characteristics. A mode in which the network device determines the first information is not limited in implementations of the present disclosure, and examples of determining the first information by the network device are given below.

In an implementation, operations at (1) include the following. The terminal device sends feedback information for channel quality of the wireless channel to the network device. The network device determines the first information based on the feedback information. That is, the network device determines the channel characteristics of the wireless channel according to the channel quality fed back by the terminal device.

In another implementation, operations at (1) include the following. The network device determines the first information based on environmental information. The environment information may be environment information corresponding to the network device. The environment information may also be environment information corresponding to the terminal device, and in this case, the terminal device needs to send the environment information corresponding to the terminal device to the network device first. Optionally, the environment information includes at least one of location information (for example, a location where the network device is located, such as a geographical location, a location determined based on global positioning system (GPS) positioning, etc.), region information (for example, a region where the network device is located, such as a region divided according to a certain division rule, a service coverage provided by the network device, etc.), pre-configuration information for the terminal device (for example, a feedback mode pre-configured for the terminal device, including a feedback mode pre-configured for the terminal device by the network device and a feedback mode pre-defined for the terminal device in a communication protocol), pre-configuration information for the network device (for example, a feedback mode pre-configured for the network device or referred to as a feedback mode pre-defined for the network device in a communication protocol).

### (2) the network device sends the first information to the terminal device.

After determining the first information, the network device may send the first information to the terminal device, so that the terminal device can know the channel characteristics of the wireless channel, and configures or updates the feedback mode for the CSI based on the channel characteristics. In an implementation, the first information is carried in at least one of the following messages: a broadcast message, an SIB, an RRC message, an RRC reconfiguration signaling, DCI, an MAC CE, a PDCCH order, or data information.

It should be noted that, the order of execution of two steps of "the network device sends the first information to the terminal device" and "the network device determines the feedback mode for the CSI of the wireless channel based on the first information" is not limited in implementations of the present disclosure. Optionally, the network device may send the first information to the terminal device after determining the feedback mode based on the first information. Alternatively, the network device may send the first information to the terminal device while determining the feedback mode based on the first information. Alternatively, the network device may send the first information to the terminal device before determining the feedback mode based on the first information. It should be understood that, in terms of these two steps, any combinations of the order of execution complying with logic should belong to the protection scope of the present disclosure.

Secondly, a case where the determination of the feedback mode is triggered by the terminal device will be described.

In an implementation, the above method further includes the following.

### (1) the terminal device determines the first information.

When the configuration or update of the feedback information is triggered by the terminal device, the terminal device determines the first information, that is, the terminal device determines the channel characteristics of the wireless channel, such as the delay spread characteristics, etc. The manner in which the terminal device determines the first information is not limited in implementations of the present disclosure, and examples of determining the first information by the terminal device are given blow.

In an implementation, operations at (1) include the following. The terminal device determines the first information based on a measurement result obtained by measuring a first reference signal. The first reference signal may be configured for the terminal device by the network device in advance, for example, the first reference signal includes a reference signal that is configured for the terminal device by the network device in advance for CSI measurement. Optionally, the first reference information includes at least one of: an SSB, a CSI reference signal (CSI-RS), or a de-modulation reference signal (DMRS).

In another implementation, the operations at (1) include the following. The first information is determined based on environment information, where the environment information may be environment information corresponding to the terminal device. The environment information may also be environment information corresponding to the network device, and in this case, the network device needs to first send the environment information corresponding to the network device to the terminal device. Optionally, the environment information includes at least one of: location information (for example, a location where the terminal device is located, such as a geographical location, a location determined based on GPS positioning, etc.), region information (for example, a region where the terminal device is located, such as a region divided according to a certain division rule, a serving cell where the terminal device is located, a service coverage where the terminal device is located, etc.), pre-configuration information (for example, a feedback mode pre-configured for the terminal device including a feedback mode pre-configured for the terminal device by the network device and a feedback mode pre-defined for the terminal device in a communication protocol), and pre-configuration information for the network device (for example, a feedback mode pre-configured for the network device or referred to as a feedback mode pre-defined for the network device in a communication protocol).

### (2) the terminal device sends the first information to the network device.

After determining the first information, the terminal device may send the first information to the network device, so that the network device can know the channel characteristics of the wireless channel, and configures or updates the feedback mode for the CSI based on the channel characteristics. Optionally, the first information is carried in at least one of an RRC message, uplink control information (UCI), a physical uplink control channel (PUCCH) message, or data information.

It should be noted that, the order of execution of two steps that "the terminal device sends the first information to the network device" and "the terminal device determines the feedback mode for the CSI of the wireless channel based on the first information" is not limited in implementations of the present disclosure. Optionally, the terminal device may send the first information to the network device after determining the feedback mode based on the first information. Alternatively, the terminal device may send the first information to the network device while determining the feedback mode based on the first information. Alternatively, the terminal device may send the first information to the network device before determining the feedback mode based on the first information. It should be understood that in terms of these two steps, any combinations of the order of execution complying with logic among combinations of these two steps in sequences should belong to the protection scope of the present disclosure.

In conclusion, according to technical solutions provided in implementations of the present disclosure, after the terminal device or the network device determines the characteristics of the wireless channel, the channel characteristics are indicated to the other party, so that the terminal device and the network device synchronously configure or update the feedback mode fir the CSI according to the channel characteristics, thereby achieving an optimal performance of CSI feedback. Furthermore, in implementations of the present disclosure, configuration or update of the feedback mode for the CSI may be triggered by the network device, and may also be triggered by the terminal device, and therefore the feedback mode is triggered flexibly.

In an example, the channel characteristics of the wireless channel include delay spread characteristics, and technical solutions provided in the implementations of the present disclosure are described below.

First, a process of feedback mode determination will be described where the network device triggers configuration or update of the feedback mode. Reference is made to FIG. 7, which is a schematic diagram of a process of feedback mode determination provided in an implementation of the present disclosure.

As illustrated in FIG. 7, the network device needs to determine delay spread characteristics of the wireless channel first. Optionally, the network device determines the delay spread characteristics based on channel quality fed back by the terminal device; or the network device determines the delay spread characteristics based on environment information (e. g., location information, region information, pre-configuration information for the network device, pre-configuration information for the terminal device).

After the network device determines the delay spread characteristics of the wireless channel, the network device sends the first information to the terminal device, so as to indicate the delay spread characteristics of the wireless channel to the terminal device. Optionally, the first information can be carried in at least one of a broadcast message, a SIB, an RRC message, RRC reconfiguration signaling, a DCI, a MAC CE, PDCCH order, or data information.

Optionally, the network device indicates a specific delay spread characteristic to the terminal device. For example, the network device indicates delay spread information to the terminal device, e.g., the network device indicates that the delay spread information is N nanoseconds (ns). Alternatively, the network device indicates a classification of the delay spread characteristics to the terminal device, for example, the network device indicates a category of the delay spread information to the terminal device, i.e., the network device indicates that the delay spread information is the Y-th category in X categories.

When the network device indicates the category of the delay spread information to the terminal device, there is an association relationship between the delay spread information and each category. The association relationship may be predefined in communication protocol, and may also be configured for the terminal device by the network device. When the network device configures the association relationship for the terminal device, the association relationship may be carried in a second message sent from the network device to the terminal device. Optionally, the second message includes at least one of a broadcast message, an SIB, an RRC message, RRC reconfiguration signaling, DCI, a MAC CE, PDCCH odder, or data information.

In implementations of the present disclosure, a time sequence in which the first information and the second information are sent to the terminal device by the network device is not limited. Optionally, the network device may send the second information to the terminal device before sending the first information, as illustrated in FIG. 8. The network device may also send the second information to the terminal device after sending the first information. It should be understood that in terms of these two steps of sending the first information and sending the second message, any combination of the time sequence complying with logic should belong to the protection scope of the present disclosure.

As illustrated in FIG. 7, after receiving the first information, the terminal device can determine the delay spread characteristics of the wireless channel, and configure or update the feedback mode for the CSI based on the delay spread characteristics. For example, the terminal device configures or updates a neural network (an encoded neural network) for CSI feedback. Accordingly, the network device also needs to configure or update the feedback mode for the CSI based on third information, for example, the network device configures or updates a neural network (a decoder neural network) for CSI feedback.

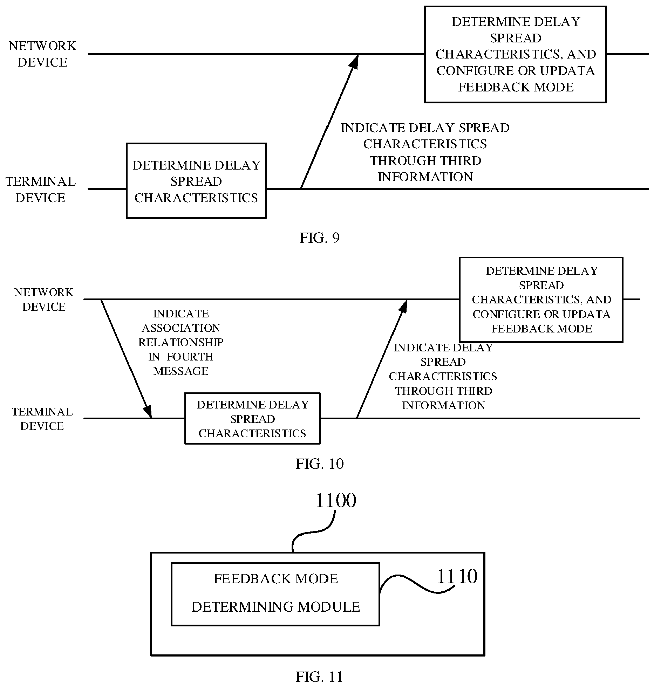

Secondly, the terminal device triggers the configuration or update of the feedback mode, and a process of feedback mode determination will be described. Reference is made to FIG. 9, which is a schematic diagram of a process of feedback mode determination provided in an implementation of the present disclosure.

As illustrated in FIG. 9, a terminal device needs to determine the delay spread characteristics of the wireless channel first. Optionally, the terminal device determines the delay spread characteristics based on a measurement result of a first reference signal (such as an SSB, a CSI-RS, or a DMRS). Alternatively, the terminal device determines the delay spread characteristics based on environment information (for example, location information, region information, pre-configuration information for the network device, or pre-configuration information for the terminal device).

After the terminal device determines the delay spread characteristics of the wireless channel, the terminal device sends the third information to the network device to indicate the delay spread characteristics of the wireless channel to the network device. Optionally, the third information may be carried in at least one of: an RRC message, UCI, a PUCCH message, or data information.

Optionally, the terminal device indicates a specific delay spread characteristic to the network device. For example, the terminal device indicates delay spread information to the network device, e.g., the terminal device indicates that the delay spread information is N ns. Alternatively, the terminal device indicates a classification of the delay spread characteristics to the network device, for example, the terminal device indicates a category of the delay spread information to the network device, i.e., the terminal device indicates that the delay spread information is the Y-th category in X categories.

When the terminal device indicates the category of the delay spread information to the network device, an association relationship exists between the delay spread information and each category. The association relationship may be predefined in a communication protocol, and may also be configured for the terminal device by the network device. When the network device configures the association relationship for the terminal device, the association relationship may be carried in a fourth message sent from the network device to the terminal device. Optionally, the fourth message includes at least one of: a broadcast message, an SIB, an RRC message, RRC reconfiguration signaling, DCI, a MAC CE, PDCCH order, or data information. As illustrated in FIG. 10, when the network device configures the association relationship for the terminal device, the network device needs to send the fourth message to the terminal device before the terminal device sends the third information. It should be understood that, any time sequence in which the fourth message is sent complying with a processing logic should belong to the protection scope of the present disclosure.

As illustrated in FIG. 9, after receiving the third information, the network device can determine the delay spread characteristics of the wireless channel, and configure or update the feedback mode for the CSI based on the delay spread characteristics. For example, the network device configures or updates a neural network (a decoder neural network) for CSI feedback. Correspondingly, the terminal device also needs to configure or update the feedback mode for the CSI based on the third information, for example, the terminal device configures or updates a neural network (an encoder neural network) for CSI feedback.

It should be noted that, in foregoing implementations, the method for feedback mode determination provided in implementations of the present disclosure is described from the perspective of interaction between the terminal device (the first device) and the network device (the second device). It should be understood that, each operation executed by the terminal device (the first device) may be separately implemented as a method for feedback mode determination at the terminal device (the first device) side; and each operation executed by the network device (the second device) can be separately implemented as a method for feedback mode determination at the network device (the second device) side.

Reference is made to FIG. 11, which is a block diagram of an apparatus for feedback mode determination provided in an implementation of the present disclosure. The apparatus has functions of implementing the above-mentioned method implementations at the terminal device (first device) side, and the functions may be implemented by hardware, or may be realized by executing corresponding software by hardware. The apparatus may be the terminal device 10 described above, or may be deployed in the terminal device 10. As illustrated in FIG. 11, the apparatus 1100 includes a feedback mode determining module 1110.

The feedback mode determining module 110 is configured to determine a feedback mode for channel-state information (CSI) of a wireless channel based on first information, the first information being used for indicating channel characteristics of the wireless channel.

In an implementation, the feedback mode determining module is configured to: configure the feedback mode based on the first information; or update the feedback mode based on the first information.

In an implementation, the feedback mode includes feeding back the CSI through a feedback model, the feedback model including a neural network model used for feeding back the CSI.

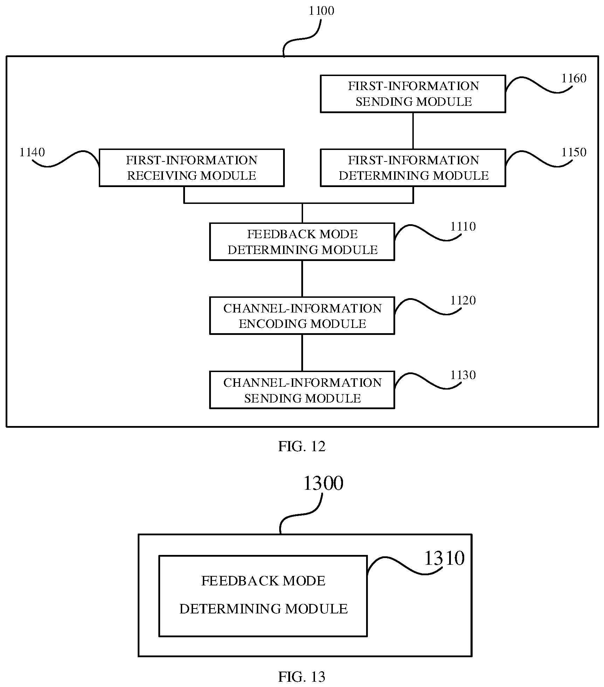

In an implementation, the feedback model includes an encoding model. As illustrated in FIG. 12, the apparatus 1100 further includes a channel-information encoding module 1120 and a channel-information sending module 1130. The channel-information encoding module 1120 is configured to invoke the encoding model to encode the CSI to obtain first channel-information. The channel-information sending module 1130 is configured to send the first channel-information to the second device.

In an implementation, as illustrated in FIG. 12, the apparatus 1100 further includes a first-information receiving module 1140. The first-information receiving module 1140 is configured to receive the first information from the second device.

In an implementation, the first information is carried in at least one of: a broadcast message, a system information block (SIB), a radio resource control (RRC) message, RRC reconfiguration signaling, downlink control information (DCI), a media access control (MAC) control element (CE), a physical downlink control channel (PDCCH) order, or data information.

In an implementation, as illustrated in FIG. 12, the apparatus 1100 further includes a first-information determining module 1150 and a first-information sending module 1160. The first-information determining module 1150 is configured to determine the first information. The first-information sending module 1160 is configured to send the first information to the second device.

In an implementation, as illustrated in FIG. 12, the first-information determining module 1150 is configured to determine the first information based on a measurement result obtained by measuring a first reference signal.

In an implementation, the first reference information includes at least one of: a synchronization signal block (SSB), a CSI reference signal (CSI-RS), or a de-modulation reference signal (DMRS).

In an implementation, as illustrated in FIG. 12, the first-information determining module 1150 is configured to determine the first information based on environmental information.

In an implementation, the environment information includes at least one of location information, region information, pre-configuration information for the first device, or pre-configuration information for the second device.

In an implementation, the channel characteristics include at least one of: delay spread characteristics, azimuth angle of departure (AOD) spread characteristics, azimuth angle-of-arrival (AOA) spread characteristics, zenith AOD spread characteristics, zenith AOA spread characteristics, shadow fading characteristics, multipath-cluster number characteristics, sub-path number characteristics in a multipath cluster, intra-cluster delay spread characteristics, intra-cluster azimuthal AOD spread characteristics, intra-cluster azimuthal AOA spread characteristics, intra-cluster zenith AOD spread characteristics, intra-cluster zenith AOA spread characteristics, and intra-cluster shadow fading characteristics.

In an implementation, the channel characteristics include delay spread characteristics, and the first information includes delay spread information and/or category indication information. The category indication information is used for indicating a category to which the delay spread information corresponds in a first association relationship, and the first association relationship includes an association relationship between the delay spread information and the category indication information.

In an implementation, the first association relationship is predefined in a communication protocol; or the first association relationship is carried in a second message from a second device.

In an implementation, the second message includes at least one of: a broadcast message, an SIB, an RRC message, RRC reconfiguration signaling, DCI, an MAC CE, a PDCCH order, or data information.

In conclusion, according to technical solutions provided in implementations of the present disclosure, based on the channel characteristics of the wireless channel, the terminal device and the network device each determine a feedback method for the CSI of the wireless channel, so that the terminal device can send the CSI to the network device in different feedback modes, and accordingly, the network device can receive the CSI differentially based on different feedback modes. In this way, it is possible to avoid using a fixed feedback mode for CSI in different channel environments of the wireless channel, and ensure that a feedback mode for the CSI matches a channel environment of the wireless channel, so that CSI feedback adapts to a complex channel environment of the wireless channel, which is conductive to obtaining an optimal performance of CSI feedback and obtaining a better performance gain of a communication system.

Reference is made to FIG. 13, which is a block diagram of an apparatus for feedback mode determination provided in an implementation of the present disclosure. The apparatus has functions of implementing the above-mentioned method implementations at the network device (second device) side, and the functions may be implemented by hardware, or may be realized by executing corresponding software by hardware. The apparatus may be the network device 20 described above, or may be deployed in the network device 20. As illustrated in FIG. 13, the apparatus 1300 includes a feedback mode determining module 1310.

The feedback mode determining module 1310 is configured to determine a feedback mode for channel-state information (CSI) of a wireless channel based on first information, the first information being used for indicating channel characteristics of the wireless channel.

In an implementation, the feedback mode determining module 1310 is configured to: configure the feedback mode based on the first information; or update the feedback mode based on the first information.

In an implementation, the feedback mode includes feeding back the CSI through a feedback model, and the feedback model includes a neural network model used for feeding back the CSI.

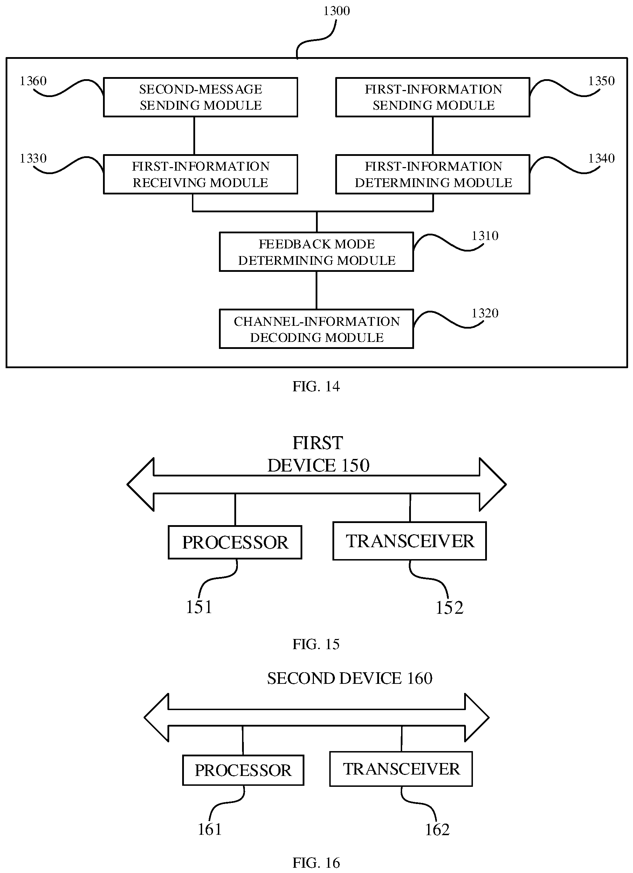

In an implementation, the feedback model includes a decoding model. As illustrated in FIG. 14, the apparatus 1300 further includes a channel-information decoding module 1320. The channel-information decoding module 1320 is configured to invoke the decoding model to decode first channel-information to obtain the CSI, where the first channel-information is obtained at a first device by encoding the CSI.

In an implementation, as illustrated in FIG. 14, the apparatus 1300 further includes a first-information receiving module 1330 configured to receive the first information from the first device.

In an implementation, the first information is carried in at least one of a radio resource control (RRC) message, uplink control information (UCI), a physical uplink control channel (PUCCH) message, or data information.

In an implementation, as illustrated in FIG. 14, the apparatus 1300 further includes a first-information determining module 1340 and a first-information sending module 1350. The first-information determining module 1340 is configured to determine the first information. The first-information sending module 1350 is configured to send the first information to the first device.

In an implementation, as illustrated in FIG. 14, the first-information determining module 1340 is configured to: receive, from the first device, feedback information for channel quality of the wireless channel; and determine the first information based on the feedback information.

In an implementation, as illustrated in FIG. 14, the first-information determining module 1340 is configured to determine the first information based on environmental information.

In an implementation, the environment information includes at least one of location information, region information, pre-configuration information for the first device, and pre-configuration information for the second device.

In an implementation, the channel characteristics include at least one of: delay spread characteristics, azimuthal AOD spread characteristics, azimuthal angle-of-arrival (AOA) spread characteristics, zenith AOD spread characteristics, zenith AOA spread characteristics, shadow fading characteristics, multipath cluster number characteristics, sub-path number characteristics in a multipath cluster, intra-cluster delay spread characteristics, intra-cluster azimuthal AOD spread characteristics, intra-cluster azimuthal AOA spread characteristics, intra-cluster zenith AOD spread characteristics, intra-cluster zenith AOA spread characteristics, and intra-cluster shadow fading characteristics.

In an implementation, the channel characteristics include delay spread characteristics, and the first information includes delay spread information and/or category indication information. The category indication information is used for indicating a category to which the delay spread information corresponds in a first association relationship, and the first association relationship includes an association relationship between the delay spread information and the category indication information.

In an implementation, the first association relationship is predefined in a communication protocol.

In an implementation, as illustrated in FIG. 14, the apparatus 1300 further includes a second-message sending module 1360 configured to send a second message to a first device, where the first association relationship is carried in the second message.

In an implementation, the second message includes at least one of: a broadcast message, a system information block (SIB), an RRC message, RRC reconfiguration signaling, downlink control information (DCI), a media access control (MAC) control element (CE), a physical downlink control channel (PDCCH) order, or data information.

In conclusion, according to technical solutions provided in implementations of the present disclosure, based on the channel characteristics of the wireless channel, the terminal device and the network device each determine a feedback method for the CSI of the wireless channel, so that the terminal device can send the CSI to the network device in different feedback modes, and accordingly, the network device can receive the CSI differentially based on different feedback modes. In this way, it is possible to avoid using a fixed feedback mode for CSI in different channel environments of the wireless channel, and ensure that a feedback mode for the CSI matches a channel environment of the wireless channel, so that the CSI feedback adapts to a complex channel environment of the wireless channel, which is conductive to obtaining an optimal performance of CSI feedback and obtaining a better performance gain of a communication system.

It should be noted that, when each of the apparatuses provided in the above implementations implements functions of the apparatus, division of the foregoing functional modules is used as an example for description. In actual applications, the foregoing functions may be allocated to different functional modules for implementation according to actual requirements, that is, a content structure of a device is divided into different functional modules to implement all or a part of the foregoing functions.

With respect to the apparatuses in the foregoing implementations, a specific mode in which each module executes operations has been described in detail in method implementations, and will not be described in detail herein.

Reference is made to FIG. 15, which is a schematic structural diagram of a first device 150 provided in an implementation of the present disclosure. For example, the first device may be configured to execute the method for feedback mode determination at the terminal device (first device) side. Specifically, the first device 150 may include a processor 151 and a transceiver 152 connected with the processor 151.

The processor 151 includes one or more processing cores. The processor 151 executes various function applications and information processing by running software programs and modules.

The transceiver 152 includes a receiver and a transmitter. Optionally, the transceiver 152 is a communication chip.

In an example, the first device 150 further includes a memory and a bus. The memory is connected with the processor through the bus. The memory is configured to store a computer program, and the processor is configured to execute the computer program so as to implement ate various operations executed by the first device in the described method implementations.

In addition, the memory may be implemented by any type of transitory or non-transitory storage device, or combination thereof. The transitory or non-transitory storage device includes, but is not limited to, a random-access memory (RAM), a read-only memory (ROM), an erasable programmable ROM (EPROM), an electrically EPROM (EEPROM), a flash memory or other solid-state storage technologies, a compact disc ROM (CD-ROM), a digital video disc (DVD) or other optical storages, magnetic cassettes, magnetic tapes, magnetic disk storage or other magnetic storage devices.

The processor 151 is configured to determine a feedback mode for channel-state information (CSI) of a wireless channel based on first information, the first information being used for indicating channel characteristics of the wireless channel.

In an implementation, the processor 151 is configured to configure the feedback mode based on the first information; or update the feedback mode based on the first information.

In an implementation, the feedback mode includes feeding back the CSI through a feedback model, and the feedback model includes a neural network model used for feeding back the CSI.

In an implementation, the feedback model includes an encoding model, and the processor 151 is further configured to invoke the encoding model to encode the CSI to obtain first channel-information; and the transceiver 152 is configured to the first channel-information to a second device.

In an implementation, the transceiver 152 is configured to receive the first information from the second device.

In an implementation, the first information is carried in at least one of a broadcast message, a system information block (SIB), a radio resource control (RRC) message, RRC reconfiguration signaling, downlink control information (DCI), a media access control (MAC) control element (CE), a physical downlink control channel (PDCCH) order, or data information.

In an implementation, the processor 151 is further configured to determine the first information; and the transceiver 152 is configured to send the first information to the second device.

In an implementation, the processor 151 is further configured to determine the first information based on a measurement result obtained by measuring a first reference signal.

In an implementation, the first reference information includes at least one of: a synchronization signal block (SSB), a CSI reference signal (CSI-RS), or a de-modulation reference signal (DMRS).

In an implementation, the processor 151 is further configured to determine the first information based on environmental information.

In an implementation, the environment information includes at least one of location information, region information, pre-configuration information for the first device, or pre-configuration information for the second device.

In an implementation, the channel characteristics include at least one of: delay spread characteristics, azimuth angle of departure (AOD) spread characteristics, azimuth angle-of-arrival (AOA) spread characteristics, zenith AOD spread characteristics, zenith AOA spread characteristics, shadow fading characteristics, multipath-cluster number characteristics, sub-path number characteristics in a multipath cluster, intra-cluster delay spread characteristics, intra-cluster azimuthal AOD spread characteristics, intra-cluster azimuthal AOA spread characteristics, intra-cluster zenith AOD spread characteristics, intra-cluster zenith AOA spread characteristics, and intra-cluster shadow fading characteristics.

In an implementation, the channel characteristics include delay spread characteristics, and the first information includes delay spread information and/or category indication information. The category indication information is used for indicating a category to which the delay spread information corresponds in a first association relationship, and the first association relationship includes an association relationship between the delay spread information and the category indication information.

In an implementation, the first association relationship is predefined in a communication protocol; or the first association relationship is carried in a second message from a second device.

In an implementation, the second message includes at least one of: a broadcast message, an SIB, an RRC message, RRC reconfiguration signaling, DCI, an MAC CE, a PDCCH order, or data information.

Reference is made to FIG. 16, which is a schematic structural diagram of a second device 160 provided in an implementation of the present disclosure. For example, the second device may be configured to execute the method for feedback mode determination at the network device (second device) side. Specifically, the second device 160 may include a processor 161 and a transceiver 162 connected with the processor 161.

The processor 161 includes one or more processing cores. The processor 161 executes various function applications and information processing by running software programs and modules.

The transceiver 162 includes a receiver and a transmitter. Optionally, the transceiver 162 is a communication chip.

In an example, the first device 160 further includes a memory and a bus. The memory is connected with the processor through the bus. The memory is configured to store a computer program, and the processor is configured to execute the computer program so as to implement ate various operations executed by the first device in the described method implementations.

In addition, the memory may be implemented by any type of transitory or non-transitory storage device, or combination thereof. The transitory or non-transitory storage device includes, but is not limited to, a random-access memory (RAM), a read-only memory (ROM), an erasable programmable ROM (EPROM), an electrically EPROM (EEPROM), a flash memory or other solid-state storage technologies, a compact disc ROM (CD-ROM), a digital video disc (DVD) or other optical storages, magnetic cassettes, magnetic tapes, magnetic disk storage or other magnetic storage devices.

The processor 161 is configured to determine a feedback mode for channel-state information (CSI) of a wireless channel based on first information, the first information being used for indicating channel characteristics of the wireless channel.

In an implementation, the processor 161 is configured to configure the feedback mode based on the first information; or update the feedback mode based on the first information.

In an implementation, the feedback mode includes feeding back the CSI through a feedback model, where the feedback model includes a neural network model used for feeding back the CSI.

In an implementation, the feedback model includes a decoding model, and the processor 161 is further configured to invoke the decoding model to decode first channel-information to obtain the CSI, where the first channel-information is obtained at the first device by encoding the CSI.

In an implementation, the transceiver 162 is configured to receive the first information from the first device.

In an implementation, the first information is carried in at least one of a radio resource control (RRC) message, uplink control information (UCI), a physical uplink control channel (PUCCH) message, or data information.

In an implementation, the processor 161 is further configured to determine the first information, and the transceiver 162 is further configured to send the first information to a first device.

In an implementation, the processor 161 is further configured to receive, from the first device, feedback information for channel quality of the wireless channel; and determine the first information based on the feedback information.

In an implementation, the processor 161 is further configured to determine the first information based on environmental information.

In an implementation, the environment information includes at least one of location information, region information, pre-configuration information for the first device, and pre-configuration information for the second device.

In an implementation, the channel characteristics include at least one of: delay spread characteristics, azimuthal AOD spread characteristics, azimuthal angle-of-arrival (AOA) spread characteristics, zenith AOD spread characteristics, zenith AOA spread characteristics, shadow fading characteristics, multipath cluster number characteristics, sub-path number characteristics in a multipath cluster, intra-cluster delay spread characteristics, intra-cluster azimuthal AOD spread characteristics, intra-cluster azimuthal AOA spread characteristics, intra-cluster zenith AOD spread characteristics, intra-cluster zenith AOA spread characteristics, and intra-cluster shadow fading characteristics.

In an implementation, the channel characteristics include delay spread characteristics, and the first information includes delay spread information and/or category indication information. The category indication information is used for indicating a category to which the delay spread information corresponds in a first association relationship, and the first association relationship includes an association relationship between the delay spread information and the category indication information.

In an implementation, the first association relationship is predefined in a communication protocol.

In an implementation, the transceiver 162 is further configured to send a second message to a first device, where the first association relationship is carried in the second message.

In an implementation, the second message includes at least one of: a broadcast message, a system information block (SIB), an RRC message, RRC reconfiguration signaling, downlink control information (DCI), a media access control (MAC) control element (CE), a physical downlink control channel (PDCCH) order, or data information.

A computer-readable storage medium is further provided in implementations of the present disclosure. The storage medium stores a computer program. The computer program is configured to be executed by a processor of a first device, to implement the foregoing method for feedback mode determination at the first device side.

A computer-readable storage medium is further provided in implementations of the present disclosure. The storage medium stores a computer program. The computer program is configured to be executed by a processor of a second device, to implement the foregoing method for feedback mode determination at the second device side.

A chip is further provided in implementations of the present disclosure. The chip includes a programmable logic circuit and/or a program instruction. When the chip runs on the first device, the chip is configured to implement the foregoing method for feedback mode determination at the first device side.

A chip is further provided in implementations of the present disclosure. The chip includes a programmable logic circuit and/or a program instruction. When the chip runs on the second device, the chip is configured to implement the foregoing method for feedback mode determination at the second device side.

A computer program product is further provided in implementations of the present disclosure. When the computer program product runs on the first device, the computer is enabled to execute the method for feedback mode determination at the first device side.

A computer program product is further provided in implementations of the present disclosure. When the computer program product runs on the second device, a computer is enabled to execute the method for feedback mode determination at the second device side.

Those of ordinary skill in the art should appreciate that in one or more of the above implementations, the functions described in implementations of the present disclosure may be implemented with hardware, software, firmware, or any combination thereof. When the functions are implemented with software, the functions may be stored in a computer-readable medium or sent as one or more instructions or one or more codes in the computer-readable medium. The computer-readable media includes computer storage media and communication media, and the communication media includes any medium that facilitates transmission of a computer program from one place to another. The storage medium may be any available media that can be accessed by a general purpose or special purpose computer.

The foregoing descriptions are merely exemplary implementations of the present disclosure, but are not intended to limit the present disclosure. Any modification, equivalent replacement, and improvement made within the spirit and principle of the present disclosure shall belong to the protection scope of the present disclosure.

## Claims

1. A method for feedback mode determination, applied to a first device and comprising:
determining a feedback mode for channel-state information (CSI) of a wireless channel based on first information, the first information being used for indicating channel characteristics of the wireless channel.

2. The method of claim 1, wherein determining the feedback mode for the CSI of the wireless channel based on the first information comprises:
configuring the feedback mode based on the first information; or
updating the feedback mode based on the first information.

3. The method of claim 1 or 2, wherein the feedback mode comprises feeding back the CSI through a feedback model, and the feedback model comprises a neural network model used for feeding back the CSI.

4. The method of claim 3, wherein the feedback model comprises an encoding model; and wherein after determining the feedback mode for the CSI of the wireless channel based on the first information, the method further comprises:
invoking the encoding model to encode the CSI to obtain first channel-information; and
sending the first channel-information to a second device.

5. The method of any one of claims 1 to 4, wherein before determining the feedback mode for the CSI of the wireless channel based on the first information, the method further comprises:
receiving the first information from a second device.

6. The method of claim 5, wherein the first information is carried in at least one of: a broadcast message, a system information block (SIB), a radio resource control (RRC) message, RRC reconfiguration signaling, downlink control information (DCI), a media access control (MAC) control element (CE), a physical downlink control channel (PDCCH) order, or data information.

7. The method of any one of claims 1 to 4, further comprising:
determining the first information; and
sending the first information to a second device.

8. The method of claim 7, wherein determining the first information comprises:
determining the first information based on a measurement result obtained by measuring a first reference signal.

9. The method of claim 8, wherein the first reference information comprises at least one of: a synchronization signal block (SSB), a CSI reference signal (CSI-RS), or a de-modulation reference signal (DMRS).

10. The method of claim 7, wherein determining the first information comprises:
determining the first information based on environmental information.

11. The method of claim 10, wherein the environment information comprises at least one of: location information, region information, pre-configuration information for the first device, or pre-configuration information for the second device.

12. The method of any one of claims 1 to 11, wherein the channel characteristics comprise at least one of delay spread characteristics, azimuth angle of departure (AOD) spread characteristics, azimuth angle-of-arrival (AOA) spread characteristics, zenith AOD spread characteristics, zenith AOA spread characteristics, shadow fading characteristics, multipath-cluster number characteristics, sub-path number characteristics in a multipath cluster, intra-cluster delay spread characteristics, intra-cluster azimuthal AOD spread characteristics, intra-cluster azimuthal AOA spread characteristics, intra-cluster zenith AOD spread characteristics, intra-cluster zenith AOA spread characteristics, or intra-cluster shadow fading characteristics.

13. The method of any one of claims 1 to 12, wherein the channel characteristics comprise delay spread characteristics, and the first information comprises delay spread information and/or category indication information, and wherein
the category indication information is used for indicating a category to which the delay spread information corresponds in a first association relationship, and the first association relationship comprises an association relationship between the delay spread information and the category indication information.

14. The method of claim 13, wherein the first association relationship is predefined in a communication protocol; or the first association relationship is carried in a second message from a second device.

15. The method of claim 14, wherein the second message comprises at least one of a broadcast message, an SIB, an RRC message, RRC reconfiguration signaling, DCI, an MAC CE, a PDCCH order, or data information.

16. A method for feedback mode determination, applied to a second device and comprising:
determining a feedback mode for channel-state information (CSI) of a wireless channel based on first information, the first information being used for indicating channel characteristics of the wireless channel.

17. The method of claim 16, wherein determining the feedback mode for the CSI of the wireless channel based on the first information comprises:
configuring the feedback mode based on the first information; or
updating the feedback mode based on the first information.

18. The method of claim 16 or 17, wherein the feedback mode comprises feeding back the CSI through a feedback model, and the feedback model comprises a neural network model used for feeding back the CSI.

19. The method of claim 18, wherein the feedback model comprises a decoding model; and wherein after determining the feedback mode for the CSI of the wireless channel based on the first information, the method further comprises:
invoking the decoding model to decode first channel-information to obtain the CSI, wherein the first channel-information is obtained at the first device by encoding the CSI.

20. The method of any one of claims 16 to 19, wherein before determining the feedback mode for the CSI of the wireless channel based on the first information, the method further comprises:
receiving the first information from the first device.

21. The method of claim 20, wherein the first information is carried in at least one of: a radio resource control (RRC) message, uplink control information (UCI), a physical uplink control channel (PUCCH) message, or data information.

22. The method of any one of claims 16 to 19, further comprising:
determining the first information; and
sending the first information to a first device.

23. The method of claim 22, wherein determining the first information comprises:
receiving, from the first device, feedback information for channel quality of the wireless channel; and
determining the first information based on the feedback information.

24. The method of claim 22, wherein determining the first information comprises:
determining the first information based on environmental information.

25. The method of claim 24, wherein the environment information comprises at least one of location information, region information, pre-configuration information for the first device, and pre-configuration information for the second device.

26. The method of any one of claims 16 to 25, wherein the channel characteristics comprise at least one of delay spread characteristics, azimuthal azimuth angle of departure (AOD) spread characteristics, azimuthal angle-of-arrival (AOA) spread characteristics, zenith AOD spread characteristics, zenith AOA spread characteristics, shadow fading characteristics, multipath cluster number characteristics, sub-path number characteristics in a multipath cluster, intra-cluster delay spread characteristics, intra-cluster azimuthal AOD spread characteristics, intra-cluster azimuthal AOA spread characteristics, intra-cluster zenith AOD spread characteristics, intra-cluster zenith AOA spread characteristics, or intra-cluster shadow fading characteristics.

27. The method of any one of claims 16 to 26, wherein the channel characteristics comprise delay spread characteristics, and the first information comprises delay spread information and/or category indication information; and wherein
the category indication information is used for indicating a category to which the delay spread information corresponds in a first association relationship, and the first association relationship comprises an association relationship between the delay spread information and the category indication information.

28. The method of claim 27, wherein the first association relationship is predefined in a communication protocol.

29. The method of claim 27, further comprising:
sending a second message to a first device, wherein the first association relationship is carried in the second message.

30. The method of claim 29, wherein the second message comprises at least one of a broadcast message, a system information block (SIB), an RRC message, RRC reconfiguration signaling, downlink control information (DCI), a media access control (MAC) control element (CE), a physical downlink control channel (PDCCH) order, or data information.

31. An apparatus for feedback mode determination, deployed in a first device and comprising:
a feedback mode determining module configured to determine a feedback mode for channel-state information (CSI) of a wireless channel based on first information, the first information being used for indicating channel characteristics of the wireless channel.

32. The apparatus of claim 31, wherein the feedback mode determining module is configured to:
configure the feedback mode based on the first information; or
update the feedback mode based on the first information.

33. The apparatus of claim 31 or 32, wherein the feedback mode comprises feeding back the CSI through a feedback model, and the feedback model comprises a neural network model used for feeding back the CSI.

34. The apparatus of claim 33, wherein the feedback model comprises an encoding model, and the apparatus further comprises:
a channel-information encoding module configured to invoke the encoding model to encode the CSI to obtain first channel-information; and
a channel-information sending module configured to send the first channel-information to a second device.

35. The apparatus of any one of claims 31 to 34, further comprising:
a first-information receiving module configured to receive the first information from a second device.

36. The apparatus of claim 35, wherein the first information is carried in at least one of a broadcast message, a system information block (SIB), a radio resource control (RRC) message, RRC reconfiguration signaling, downlink control information (DCI), a media access control (MAC) control element (CE), a physical downlink control channel (PDCCH) order, or data information.

37. The apparatus of any one of claims 31 to 34, further comprising:
a first-information determining module configured to determine the first information; and
a first-information sending module configured to send the first information to a second device.

38. The apparatus of claim 37, wherein the first-information determining module is configured to determine the first information based on a measurement result obtained by measuring a first reference signal.

39. The apparatus of claim 38, wherein the first reference information comprises at least one of: a synchronization signal block (SSB), a CSI reference signal (CSI-RS), or a de-modulation reference signal (DMRS).

40. The apparatus of claim 37, wherein the first-information determining module is configured to determine the first information based on environmental information.

41. The apparatus of claim 40, wherein the environment information comprises at least one of: location information, region information, pre-configuration information for the first device, or pre-configuration information for the second device.

42. The apparatus of any one of claims 31 to 41, wherein the channel characteristics comprise at least one of: delay spread characteristics, azimuth angle of departure (AOD) spread characteristics, azimuth angle-of-arrival (AOA) spread characteristics, zenith AOD spread characteristics, zenith AOA spread characteristics, shadow fading characteristics, multipath-cluster number characteristics, sub-path number characteristics in a multipath cluster, intra-cluster delay spread characteristics, intra-cluster azimuthal AOD spread characteristics, intra-cluster azimuthal AOA spread characteristics, intra-cluster zenith AOD spread characteristics, intra-cluster zenith AOA spread characteristics, and intra-cluster shadow fading characteristics.

43. The apparatus of any one of claims 31 to 42, wherein the channel characteristics comprise delay spread characteristics, and the first information comprises delay spread information and/or category indication information, and wherein
the category indication information is used for indicating a category to which the delay spread information corresponds in a first association relationship, and the first association relationship comprises an association relationship between the delay spread information and the category indication information.

44. The apparatus of claim 43, wherein the first association relationship is predefined in a communication protocol; or the first association relationship is carried in a second message from a second device.

45. The apparatus of claim 44, wherein the second message comprises at least one of: a broadcast message, an SIB, an RRC message, RRC reconfiguration signaling, DCI, an MAC CE, a PDCCH order, or data information.

46. An apparatus for feedback mode determination, deployed in a second device and comprising:
a feedback mode determining module configured to determine a feedback mode for channel-state information (CSI) of a wireless channel based on first information, the first information being used for indicating channel characteristics of the wireless channel.

47. The apparatus of claim 46, wherein the feedback mode determining module is configured to:
configure the feedback mode based on the first information; or
update the feedback mode based on the first information.

48. The apparatus of claim 46 or 47, wherein the feedback mode comprises feeding back the CSI through a feedback model, and the feedback model comprises a neural network model used for feeding back the CSI.

49. The apparatus of claim 48, wherein the feedback model comprises a decoding model; and the apparatus further comprises:
a channel-information decoding module configured to invoke the decoding model to decode first channel-information to obtain the CSI, wherein the first channel-information is obtained at the first device by encoding the CSI.

50. The apparatus of any one of claims 46 to 49, further comprising:
a first-information receiving module configured to receive the first information from the first device.

51. The apparatus of claim 50, wherein the first information is carried in at least one of: a radio resource control (RRC) message, uplink control information (UCI), a physical uplink control channel (PUCCH) message, or data information.

52. The apparatus of any one of claims 46 to 49, further comprising:
a first-information determining module configured to determine the first information; and
a first-information sending module configured to send the first information to a first device.

53. The apparatus of claim 52, wherein the first-information determining module is configured to:
receive, from the first device, feedback information for channel quality of the wireless channel; and
determine the first information based on the feedback information.

54. The apparatus of claim 52, wherein the first-information determining module is configured to:
determine the first information based on environmental information.

55. The apparatus of claim 54, wherein the environment information comprises at least one of: location information, region information, pre-configuration information for the first device, and pre-configuration information for the second device.

56. The apparatus of any one of claims 46 to 55, wherein the channel characteristics comprise at least one of: delay spread characteristics, azimuthal AOD spread characteristics, azimuthal angle-of-arrival (AOA) spread characteristics, zenith AOD spread characteristics, zenith AOA spread characteristics, shadow fading characteristics, multipath cluster number characteristics, sub-path number characteristics in a multipath cluster, intra-cluster delay spread characteristics, intra-cluster azimuthal AOD spread characteristics, intra-cluster azimuthal AOA spread characteristics, intra-cluster zenith AOD spread characteristics, intra-cluster zenith AOA spread characteristics, and intra-cluster shadow fading characteristics.

57. The apparatus of any one of claims 46 to 56, wherein the channel characteristics comprise delay spread characteristics, and the first information comprises delay spread information and/or category indication information; and wherein
the category indication information is used for indicating a category to which the delay spread information corresponds in a first association relationship, and the first association relationship comprises an association relationship between the delay spread information and the category indication information.

58. The apparatus of claim 57, wherein the first association relationship is predefined in a communication protocol.

59. The apparatus of claim 57, further comprising:
a second-message sending module configured to send a second message to a first device, wherein the first association relationship is carried in the second message.

60. The apparatus of claim 59, wherein the second message comprises at least one of: a broadcast message, a system information block (SIB), an RRC message, RRC reconfiguration signaling, downlink control information (DCI), a media access control (MAC) control element (CE), a physical downlink control channel (PDCCH) order, or data information.

61. A first device, comprising a processor and a transceiver connected with the processor, wherein the processor is configured to determine a feedback mode for channel-state information (CSI) of a wireless channel based on first information, the first information being used for indicating channel characteristics of the wireless channel.

62. A second device, comprising a processor and a transceiver connected with the processor; wherein the processor is configured to determine a feedback mode for channel-state information of a wireless channel based on first information, the first information being used for indicating channel characteristics of the wireless channel.

63. A computer-readable storage medium, wherein the storage medium stores a computer program, and the computer program is configured to be executed by a processor of a first device to implement the method for feedback mode determination of any one of claims 1 to 15.

64. A computer-readable storage medium, wherein the storage medium stores a computer program, and the computer program is configured to be executed by a processor of a second device to implement the method for feedback mode determination of any one of claims 16 to 30.
